# EUROPÄISCHE PATENTANMELDUNG

(11) **EP 0 557 614 A1**
(43) Veröffentlichungstag der Anmeldung: **01.09.1993**
(21) Anmeldenummer: 92122049.7
(22) Anmeldetag: 28.12.1992
(51) Int. Cl.: B29C 65/18, G11B 23/00, B29K 23/00

(54) **Verfahren zum Verschweissen von halogenfreien Thermoplastfolien**

(30) Priorität: 28.02.1992 DE 4206262
(71) Anmelder: PAUL KIEFEL GMBH, D-83395 Freilassing (DE)
(72) Erfinder: Hinterseer, Heinz, W-8228 Freilassing (DE)
(74) Vertreter: Patentanwälte Leinweber & Zimmermann

(57) **Zusammenfassung**

Das Verfahren dient dem Verschweißen von halogenfreien Thermoplastfolien (1,2) oder -platten mit zwischengeschalteten Einlagen, (3,4) z.B. Verstärkunseinlagen unter Verwendung einer Schweißvorrichtung mit einem auf die gewünschte Schweißtemperatur erwärmbaren Schweißwerkzeug (5') und einem auf eine Temperatur, die unterhalb der Schmelztemperatur der Folien liegt, einstellbaren Gegenwerkzeug (5). Letzteres weist eine der gewünschten Schweiß- oder Prägekontur (8) entsprechende Profilierung, insbesondere eine Schneidkante (7) auf. Durch eine in die Schweißvorrichtung einführbare wärmeleitfähige Trennfolie (11) hindurch ist den Folien (1,2) die zu ihrer Plastifizierung erforderliche thermische Energie zuleitbar. Erfindungsgemäß ist das Verschweißen von Thermoplastfolien, die vorgeformte Unter- (1) bzw. Oberfolien (2) umfassen, durch folgende Verfahrensschritte möglich:
- räumliches Vorformen mindestens einer der beiden Folien in einem Thermoformverfahren unter Ausbildung einer Vertiefung gegenüber einem erhöhten Folienstützrand,
- Abstützen der vorgeformten Unterfolie (1) im Bereich des Folienstützrandes vor oder nach dem Einlegen der Einlage in die Vertiefung,
- Aufbringen der anderen Folie (2) auf die Einlage und auf den Stützrand,
- Ausrichten bzw. Zentrieren der Folien (1,2) mittels der in Form einer sich lediglich längs des Stützrands erstreckenden Maske ausgebildeten Trennfolie (11) im Bereich zwischen Schweißwerkzeug (5') und Gegenwerkzeug (5) und
- Verschweißen der Folien (1,2) im Stützrandbereich unter Zwischenschaltung der dem Stützrandverlauf entsprechend geformten Trennfolie (11) zwischen dem Schweißwerkzeug (5') und den Folien (1,2).

## Beschreibung

Die Erfindung bezieht sich auf ein Verfahren zum Verschweißen von halogenfreien Thermoplastfolien mit zwischengeschalteten Einlagen, z.B. Verstärkungseinlagen gemäß dem Oberbegriff des geltenden Anspruches 1.

Bei einem bekannten Verfahren dieser Art (DE-PS 38 07 164) wird jeweils eine der beiden miteinander zu verschweißenden Folien, und zwar die Unterfolie mit Hilfe eines Vakuums in eine von einem der beiden Werkzeuge der Schweißpresse gebildete Mulde hineingezogen. Auf diese Weise entsteht ein Bett für die Aufnahme und Zentrierung der z.B. durch Verstärkungseinlagen gebildeten Einlagen. Am in einer flachen Ebene liegenden Randbereich dieser Unterfolie kommt dann die andere Folie, nämlich die Oberfolie sowie die Trennfolie aus hochhitzebeständigem Material, beispielsweise Polyimid, durch die hindurch der größte Teil der Schweißenergie hinzugeführt wird, zur Anlage. Durch diese Anordnung entsteht die Schweißnaht somit auch bei Anordnung von Verstärkungseinlagen unmittelbar an der Trennfolie, da die Oberfolie eben an der Trennfolie in Anlage bleibt und das gesamte zur Umhüllung der Versteifungseinlagen notwendige zusätzliche Folienmaterial aus der Unterfolie gewonnen werden muß. Mit diesem Verfahren lassen sich zwar faltbare Gegenstände, wie Buchdecken, Faltbehälter oder dgl. herstellen. Eine etwa in der Mittenebene der Versteifungseinlage liegende Schweißnaht, wie sie beispielsweise bei der Herstellung von Automobil-Sonnenblenden zwingend erforderlich ist, ist auf diese Weise aber nicht zu erreichen.

Der Erfindung liegt die Aufgabe zugrunde, das eingangs erwähnte vorbekannte Verfahren so weiter zu entwickeln, daß auch Gegenstände aus halogenfreien Thermoplastfolien im Thermokontaktverfahren herstellbar sind, bei denen die Schweißnaht in einer sich zwischen den beiden Außenflächen des Gegenstands erstreckenden Ebene verläuft.

Das Verfahren nach der Erfindung, bei dem diese Aufgabe gelöst ist, zeichnet sich im wesentlichen durch die im kennzeichnenden Teil des Anspruches 1 herausgestellten Verfahrensschritte aus.

Gemäß diesem Verfahren lassen sich nunmehr auch Gegenstände, wie Automobil-Sonnenblenden, Videokassetten-Etuis, Blisterverpackungen oder dgl. mit zwei räumlich verformten Kunststoffolienaußenseiten, einem mehr oder weniger elastischen Kern und einer Schweißnaht herstellen, die etwa in der Mittenebene der durch eine Verstärkungseinlage gebildeten Einlage verläuft.

Da die Maske eine dem Stützrandverlauf entsprechende Form erfordert, ist der Einsatz einer die Maske bildenden Trennfolie aus dünnem Metallblech oder hitzebeständiger Kunststoffolie besonders vorteilhaft. Diese übernimmt nicht nur die Antihaftfunktion zwischen dem die Schweißenergie zuführenden Schweißwerkzeug und den zu schweißenden Folien, sie begünstigt mit ihrer Steifigkeit vielmehr deren Handhabung als Einheit mit einer der beiden Folien. Hier ist es besonders günstig, wenn die Maske zur Abstützung des Stützrandes der vorgeformten, in ihrer Vertiefung die eingelegte Einlage tragenden Unterfolie Verwendung findet. Vorteilhafterweise wird dabei ein die höhenbewegliche Handhabung der Maske mitsamt der Einlage und der Unter- sowie Oberfolie in Bezug auf das Schweißwerkzeug ermöglichender Rahmen angewandt.

Zweckmäßig ist es, wenn eine Einlage eingesetzt wird, die wenigstens teilweise aus elastisch nachgiebigem Material besteht, und wenn eine solche Beaufschlagung der Oberfolie in deren Randbereich in Richtung des Stützrandes der Unterfolie erfolgt, daß die Einlage eine mindestens teilweise Komprimierung erfährt. Dabei hat es sich im Hinblick auf die Sicherstellung einer einwandfreien haltbaren Schweißnaht, über die die elastischen Folien in gespanntem Zustand gehalten werden, als sehr vorteilhaft erwiesen, wenn die Einlage zumindest während des Schweißvorgangs und unmittelbar anschließend während der Abkühlphase in komprimiertem Zustand gehalten wird. Dies kann entweder dadurch erfolgen, daß die Einlage über die anliegenden Folien einer äußeren Druckbeaufschlagung unterworfen wird. Stattdessen hat es sich auch als günstig erwiesen, wenn die Einlage durch Evakuieren des von der Folie begrenzten Raums in komprimiertem Zustand gehalten wird.

Die Erfindung ist weiterhin auf eine Vorrichtung zur Durchführung des erfindungsgemäßen Verfahrens gerichtet. Diese Vorrichtung ist im wesentlichen durch die im Anspruch 9 herausgestellten Merkmale gekennzeichnet.

Als besonders vorteilhaft hat sich zur Herstellung von Gegenständen mit mehreren Bereichen, die gegeneinander klappbar sind, z.B. Videokassetten-Etuis, das Kennzeichen erwiesen, daß die Trennfolie mehrere artikelbezogene Aussparungen aufweist, die jeweils von einem der in einem Thermoformverfahren vorgeformten Bereiche der Unterfolie oder der Oberfolie durchsetzbar sind.

Um die vorgeformten Bereiche der in die Schweißpresse eingebrachten Folien gegen nachteilige Wärmeeinwirkung zu schützen, ist es von Vorteil, wenn die Schweißstege auf ihrer der Aussparung zugewandten Seite jeweils mit einer Abdeckung aus schlecht wärmeleitendem Material verkleidet sind.

Zur Schonung der Schweißnähte im noch warmen Zustand unmittelbar nach dem Schweißvorgang, d.h. zur Sicherstellung eines gespannten Zustands der Folien beim fertigen Gegenstand ist es sehr günstig, wenn im von den Stegen des Schweiß- und/oder des Gegenwerkzeugs begrenzten Bereich eine Druckplatte zur Druckbeaufschlagung der Unter- und Oberfolien mit zwischenliegender Einlage vorgesehen ist. Dabei ist die Druckplatte zweckmäßigerweise mit einem ihre Beaufschlagung ermöglichenden Druckstößel verbunden, der sich durch eine im Schweiß- bzw. im Gegenwerkzeug vorgesehene Öffnung hindurch erstreckt.

Stattdessen, jedoch auch zusätzlich kann in weiterer vorteilhafter Ausgestaltung der Vorrichtung nach der Erfindung auch eine sich längs des der Maskenöffnung abgewandten Stützrandes der Folie verlaufende gummielastische Leiste vorgesehen sein, über die die beiden Stützränder der Unter- und der Oberfolie vor dem Verschweißen in gegenseitiger Anlage gehalten werden, und ein an eine Evakuiereinrichtung anschließbarer flacher Rohrstutzen, der im Stützrandbereich zwischen Unter- und Oberfolie, jedoch außerhalb des Schweißrandbereichs hindurchführbar ist.

Eine besonders praktische Handhabung der Vorrichtung wird ermöglicht, wenn der Rohrstutzen um eine horizontale Achse aus dem Stützrandbereich hochklappbar gelagert ist. Der praktische Einsatz der Vorrichtung wird weiterhin dadurch begünstigt, daß der die in Form einer Maske ausgebildete Trennfolie tragende Rahmen zum Einlegen und Entnehmen der Folienzuschnitte um eine horizontale Achse hochschwenkbar gelagert ist.

Vorstehend ist das erfindungsgemäße Verfahren bzw. die Vorrichtung zu dessen Durchführung für das Verschweißen von Thermoplastfolien erläutert. Dies ist nicht einschränkend zu verstehen, da es sinnvoll sein kann, in gleicher Weise auch dünne Thermoplastplatten miteinander zu verbinden.

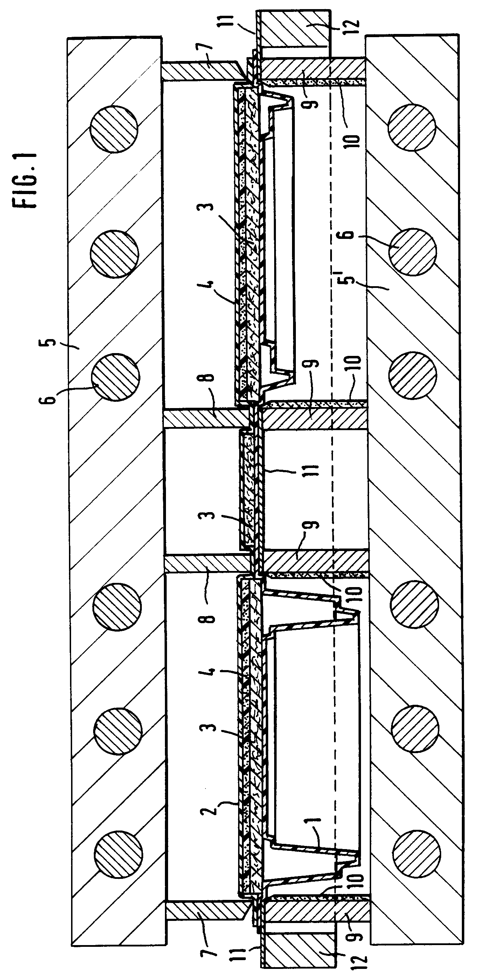

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Und zwar zeigen:
- Fig.1: eine schematische Vertikalschnittansicht einer ersten Vorrichtung nach der Erfindung und
- Fig.2: eine analoge Ansicht einer abgewandelten Vorrichtung nach der Erfindung
Wie aus Fig. 1 ersichtlich, wird eine räumlich vorgeformte, fallweise hart eingestellte Kunststoff-Unterfolie 1, die z.B. das Innenteil eines Videokassetten-Etuis bilden soll, mit einer weichen Oberfolie 2 unter Zwischenlage von Einlagen, im gezeigten Ausführungsbeispiel von versteifenden Verstärkungseinlagen 3 bzw. 4, beispielsweise aus Karton 3 sowie außenseitig zusätzlich aus Schaumfolien 4 zusammengefügt. Der Längsschnitt zeigt ein Videokassetten-Etui sowie die es im Augenblick der beginnenden Verschweißung umgebenden Teile der Schweißvorrichtung. Diese umfaßt ein Schweißwerkzeug 5' sowie ein Gegenwerkzeug 5 in Form von Heizplatten aus einem gut wärmeleitfähigen Metall, beispielsweise Aluminium. Diese werden durch geeignete Elemente, beispielsweise elektrisch beheizte Stäbe 6 aufgeheizt und mittels an sich bekannter Temperaturregeleinrichtungen auf ihrer jeweiligen Solltemperatur gehalten.

An der oberen Heizplatte des Gegenwerkzeugs 5 sind ggfs. über eine werkzeugbezogene Grundplatte entlang der Außenkontur des herzustellenden Artikels Schweißstege 7 mit angeformter Schneidkante aufgebaut. Diese Stege 7 bestehen aus einem verschleißfesten, wärmeleitfähigen Metall, beispielsweise Messing. Im Bereich der sog. Rückennähte des Videokassetten-Etuis sind Prägestege 8 aus dem gleichen Werkstoff vorgesehen, die an ihrer Wirkseite entweder glatt oder mit einem eingravierten Profil, beispielsweise einer Längs- oder Querriffelung versehen sein können.

Auf der unteren Heizplatte des Schweißwerkzeugs 5' sind gegenüber den Stegen 7 der oberen Heizplatte des Gegenwerkzeugs 5 Schweißstege 9 aufgebaut, die eine flache Wirkseite besitzen und deren Breite größer ist als die Breite der gegenüberliegenden Stege 7 des Gegenwerkzeugs 5. Die Schweißstege 9 sind vorzugsweise an ihren Innenflächen mit Verkleidungen 10 aus schlecht wärmeleitfähigem Material versehen, die dazu dienen, die Wärmestrahlung auf die benachbarte Unterfolie 1 weitgehend zu reduzieren.

Die vorgeformte Unterfolie liegt mit ihrem Folienstützrand auf einer Trennfolie 11 in Form einer sich lediglich längs des Stützrands erstreckenden Maske. Diese besteht aus einem dünnen Metallblech, das im Bereich der aus der Schweißebene nach unten austretenden Bereich der zu verschweißenden Unterfolie 1 entsprechend ausgenommen ist und damit gleichzeitig zu deren Zentrierung gegenüber dem Schweißwerkzeug 5' mit den Schweißstegen 9 sowie ggf. zu deren Transport in das und aus dem Schweißwerkzeug dient.

Diese Maske 11 ist im gezeigten Beispiel auf einem Rahmen 12 montiert, der gegenüber dem Schweißwerkzeug 5' bzw. Gegenwerkzeug 5 höhenbeweglich ist.

Die Temperatur der oberen Stege 7 und 8 liegt zur Vermeidung des Anklebens am Folienmaterial unterhalb der Schmelztemperatur der zu verschweißenden Kunststoff-Folien, im Falle von Polypropylen also zwischen 110 und 140° C. Die Temperatur der unteren Schweißstege 9 liegt dagegen wesentlich darüber, nämlich zwischen 180 und 250° C bei Polypropylen.

Die beiden Heizplatten der Schweiß- und des Gegenwerkzeugs 5 und 5' sind in geeigneter Weise gegeneinander bewegbar im Gestell einer an sich bekannten Schweißpresse gelagert. Die Anpreßkraft der Platten gegeneinander ist entsprechend der Größe des zu verschweißenden Gegenstandes einstellbar.

Mit Hilfe der beschriebenen Vorrichtung wird wie folgt gearbeitet: Nach Entnahme des gerade hergestellten Fertigteils aus der Maske außerhalb des Schweißbereiches werden die Unterfolie 1 und danach die Verstärkungseinlagen 3 und ggf. 4 eingelegt. Die Lagezentrierung dieser Teile gegenüber der Unterfolie 1 erfolgt entweder formschlüssig mit Hilfe entsprechend ausgeformter Vertiefungen der Unterfolie oder mit Hilfe an sich bekannter Hilfsvorrichtungen, sog. Pappenzentriervorrichtungen, die erst kurz vor dem Schließen der Schweißpresse zurückgezogen werden. Zuletzt wird die Oberfolie 2 aufgelegt, und die zu verschweißenden Teile werden zusammen mit der durch die Trennfolie 11 gebildete Maske in den Schweißbereich gefördert.

Anschließend wird die Schweißpresse geschlossen, wobei es zweckmäßig ist, die Hubbewegungen der Heizplatten des Schweißwerkzeugs 5' bzw. Gegenwerkzeugs 5 so zu steuern, daß die Maske 11 durch die unteren Schweißstege 9 lediglich unterstützt, jedoch nicht ausgehoben wird.

Die Schweißpresse bleibt während einer vorbestimmten Schweißzeit unter der eingestellten Schweißkraft geschlossen, wobei sowohl aus den oberen Stegen 7 und 8 des Gegenwerkzeugs 5, insbesondere aber aus den unteren Schweißstegen 9 durch die wärmeleitfähige Trennfolie 11 hindurch Wärmeenergie in die zu verschweißenden Folienbereiche eingeleitet wird, wodurch diese erweichen. Dies führt dazu, daß sich die oberen Stege 7 und 8 unter teilweiser Verdrängung des aufgeschmolzenen Folienmaterials nach außen der Trennfolie 11 soweit annähern, bis die Schneidkante des Stegs 7 fast auf die Oberseite der Trennfolie 11 auftrifft.

Anschließend wird das Schweißwerkzeug 5' mit dem Schweißsteg 9 nach unten weggezogen, während die Stege 7 und 8 des Gegenwerkzeugs 5 noch auf der Trennfolie 11 aufsitzen, allerdings ohne Gegendruck, so daß ein Aufplatzen der noch warmen Schweißnaht verhindert wird.

Nach Ablauf einer voreingestellten sog. Nachwirkzeit wird das Gegenwerkzeug 5 ebenfalls zurückgezogen und die durch die Maske gebildete Trennfolie 11 wird mit dem geschweißten Teil mit Hilfe an sich bekannter Transporteinrichtungen, wie Drehtischen oder Linearförderanlagen (Tablettenband etc.) in ein Kühlwerkzeug transportiert. Die Hälften dieses Kühlwerkzeugs sind geometrisch ebenso aufgebaut wie die beiden Hälften der Schweißvorrichtung. Sie werden jedoch auf einer möglichst niedrigen Temperatur (im allgemeinen etwa Raumtemperatur) gehalten. Die Kühlwerkzeuge sind in einer Kühlpresse montiert, die sinngemäß ebenso aufgebaut ist, wie die Schweißpresse, jedoch mit geringeren Kräften arbeitet.

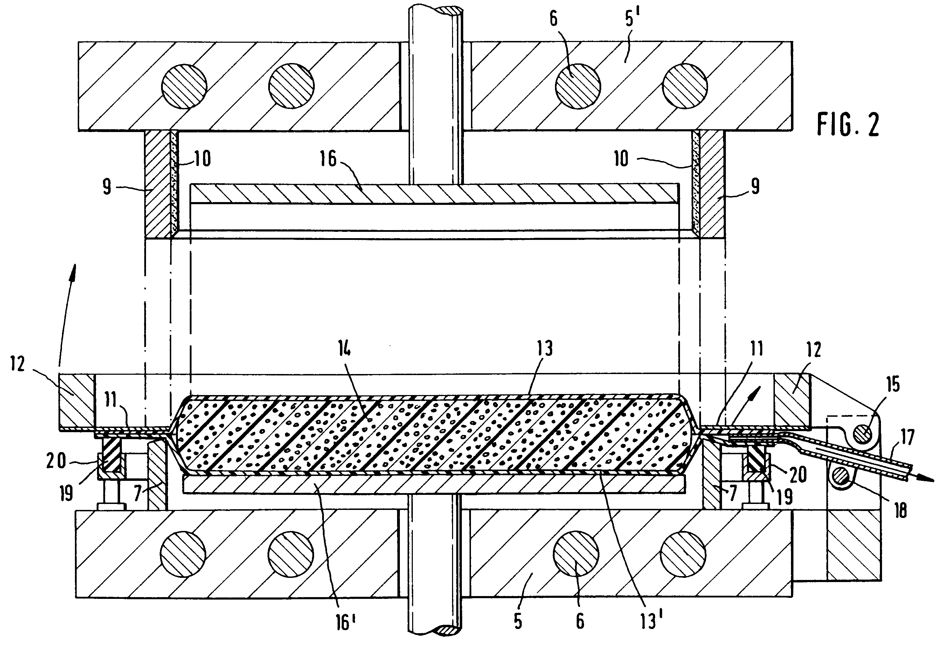

Fig. 2 zeigt eine Vorrichtung zur Herstellung eines Formteils mit einer elastischen Einlage, beispielsweise einer Automobil-Sonnenblende.

Bei dieser Vorrichtung ist der die Prägefunktion ausübende Steg 7 auf dem durch die untere Heizplatte gebildeten Gegenwerkzeug 5 aufgebaut, das in diesem Fall auf einer Temperatur unterhalb des Schmelzpunktes der Folie gehalten wird, während der Schweißsteg 9 mit der wärmedämmenden Verkleidung 10 auf dem durch die obere Heizplatte gebildeten Schweißwerkzeug 5' aufgebaut ist, das in diesem Falle auf einer Temperatur oberhalb des Schmelzpunktes des Folienmaterials gehalten wird.

Das untere plattenförmige Gegenwerkzeug 5 dient in diesem Anwendungsbeispiel auch zum Transport des zu verschweißenden Gegenstands in die Schweißpresse bzw. aus ihr heraus.

Der herzustellende Gegenstand z.B. in Form einer Automobil-Sonnenblende besteht aus zwei Weichfolien, nämlich der Unterfolie 13' und der Oberfolie 13, die unter Zwischenlage einer elastischen Verstärkung 14 in Form eines Schaumkerns an ihrem Umfang möglichst ohne Überstand, also randlos verschweißt werden solle.

Um die Bildung von Falten im Randbereich der Folien 13 und 13' beim Herumziehen um den Schaumkern 14 zu vermeiden, sind diese zweckmäßigerweise in einem vorhergehenden Thermoform-Verfahren bereits räumlich vorgeformt.

Zuerst wird die Unterfolie 13' in die unteren, eine Schneidkante aufweisenden Stege 7 zentriert eingelegt, anschließend der die Verstärkungseinlage bildende Schaumkern 14, der sich in der Höhlung der Unterfolie 13' zentriert, und anschließend die Oberfolie 13.

Nunmehr wird der zum Einlegen der genannten Teile um eine horizontale Achse 15 hochgeschwenkte Rahmen 12 mit der durch die Maske gebildeten Trennfolie 11 heruntergeklappt und hält somit die eingelegten Teile beim Transport in die Schweißpresse paßgenau auf dem unteren Gegenwerkzeug 5.

Anschließend erfolgt der Schweißvorgang durch Herabfahren des Schweißwerkzeugs 5' auf die Maske analog z.B. gemäß Fig. 1.

Die elastischen Rückstellkräfte des Schaumkerns bewirken eine Neigung zum Aufplatzen der frischen Schweißnaht nach dem Öffnen der Schweißvorrichtung. Andererseits wird aus optischen Gründen eine möglichst straffe Umhüllung des Schaumkerns 14 durch die verschweißten Folien 13, 13' gewünscht.

Zur Lösung dieses Problems sind nachfolgend zwei Wege angegeben. Der eine besteht darin, daß im Inneren der Werkzeuge 5, 5' Druckplatten 16 und 16' angeordnet sind, und zwar an Druckstößeln, die sich durch eine im Schweiß- bzw. im Gegenwerkzeug vorgesehene Öffnung hindurch erstrecken. Über diese Stößel sind die Druckplatten 16, 16' gegenüber den Werkzeugen 5, 5' bewegbar, so daß der Schaumkern 14 auch vor, während und nach dem Schweißvorgang mit ihrer Hilfe unter Druck zusammengepreßt und somit die Spannungen im Randbereich der Weichfolien weitgehend aufgehoben werden können.

Die zweite Möglichkeit besteht darin, zwischen die beiden Folien 13 und 13' im Stützrandbereich außerhalb der Stege 7 einen flachgedrückten Rohrstutzen 17 einzuführen, der zum Einlegen der Unterfolie 13' um eine horizontale Achse 18 hochgeklappt werden kann und der zum Absaugen der zwischen den Folien eingeschlossenen Luft mit Hilfe einer nicht gezeigten Evakuiereinrichtung dient.

Zum Abdichten der Stützränder der beiden Folien 13 und 13' dient ein Dichtrahmen, der beispielsweise aus einer gummielastischen Leiste 19 besteht. Diese ist beispielsweise in einem Metallrahmen 20 über wärmeisolierende Stützelemente auf der unteren Heizplatte gelagert und drückt die beiden Folien gegen die durch die Maske gebildete Trennfolie 11.

Der auf diese Weise im Inneren der Sonnenblende erzeugt Unterdruck bleibt auch nach dem Öffnen der Schweißvorrichtung wirksam und verhindert somit ein Aufplatzen der Schweißnaht.

Bei den mit den geschilderten Verfahren hergestellten Artikeln werden nach dem Entnehmen aus der Schweißvorrichtung die Folienränder entlang der durch die Schneidkanten der Stege 7 am Umfang erzeugten Kerbe von Hand vom Gutteil abgerissen.

## Patentansprüche

1. Verfahren zum Verschweißen von halogenfreien Thermoplastfolien oder -platten mit zwischengeschalteten Einlagen, z.B. Verstärkungseinlagen unter Verwendung einer Schweißvorrichtung mit einem auf die gewünschte Schweißtemperatur erwärmbaren Schweißwerkzeug und einem auf eine Temperatur, die unterhalb der Schmelztemperatur der Folien liegt, einstellbaren Gegenwerkzeug, das eine der gewünschten Schweiß- oder Prägekontur entsprechende Profilierung, insbesondere eine Schneidkante aufweist, sowie einer in die Schweißvorrichtung einführbaren wärmeleitfähigen Trennfolie, durch die hindurch den Folien die zu ihrer Plastifizierung erforderliche, vom Schweißwerkzeug ausgehende thermische Energie zuleitbar ist und von der die Folien nach ihrer Abkühlung lösbar sind, gekennzeichnet durch folgende Verfahrensschritte:
- raumliches Vorformen mindestens einer der beiden Folien, nämlich der Unterfolie in einem Thermoformverfahren unter Ausbildung einer Vertiefung gegenüber einem erhöhten Folienstützrand,
- Abstützen der vorgeformten Unterfolie im Bereich des Folienstützrandes vor oder nach dem Einlegen der ggf. mehrteiligen Einlage in die Vertiefung,
- Aufbringen der anderen Folie, nämlich der Oberfolie auf die Einlage und auf den Stützrand,
- Ausrichten bzw. Zentrieren der Folien mittels der in Form einer sich lediglich längs des Stützrands erstrekkenden Maske ausgebildeten Trennfolie im Bereich zwischen Schweißwerkzeug und Gegenwerkzeug und
- Verschweißen der Folien im Stützrandbereich unter Zwischenschaltung der dem Stützrandverlauf entsprechend geformten Trennfolie zwischen dem Schweißwerkzeug und den Folien.

2. Verfahren nach Anspruch 1, gekennzeichnet durch Verwendung einer Trennfolie in Form einer Maske aus dünnem Metallblech oder hitzebeständiger Kunststoffolie.

3. Verfahren nach Anspruch 1 und 2, gekennzeichnet durch Verwendung der Maske zur Abstützung des Stützrandes der vorgeformten, in ihrer Vertiefung die eingelegte Einlage tragenden Unterfolie.

4. Verfahren nach einem der Ansprüche 1 bis 3, gekennzeichnet durch Verwendung eines die höhenbewegliche Handhabung der Maske mitsamt der Einlage und der Unter- sowie Oberfolie in Bezug auf das Schweißwerkzeug ermöglichenden Rahmens.

5. Verfahren nach einem der Ansprüche 1 bis 4, gekennzeichnet durch Einsatz einer Einlage, die wenigstens teilweise aus elastisch nachgiebigem Material besteht, sowie eine solche Beaufschlagung der Oberfolie in deren Randbereich in Richtung des Stützrandes der Unterfolie, daß die Einlage eine mindestens teilweise Komprimierung erfährt.

6. Verfahren nach einem der Ansprüche 1 bis 5, dadurch gekennzeichnet, daß die Einlage zumindest während des Schweißvorgangs und unmittelbar anschließend während der Abkühlphase in komprimiertem Zustand gehalten wird.

7. Verfahren nach Anspruch 6, dadurch gekennzeichnet, daß die Einlage über die anliegenden Folien einer äußeren Druckbeaufschlagung unterworfen wird.

8. Verfahren nach Anspruch 6, dadurch gekennzeichnet, daß die Einlage durch Evakuieren des von der Folie begrenzten Raums in komprimiertem Zustand gehalten wird.

9. Vorrichtung zur Durchführung des Verfahrens nach einem der Ansprüche 1 bis 8, mit einem Schweißwerkzeug (5') und einem Gegenwerkzeug (5) einer Schweißpresse, die übereinander angeordnet und von denen mindestens eines relativ zum anderen auf- und absteuerbar ist, mit an dem Schweißwerkzeug (5') angeordneten Schweißstegen (9) sowie den Schweißstegen zugewandten, am Gegenwerkzeug (5) angeordneten Stegen (7,8), von denen die äußeren (7) eine durchgehende Schneidkante aufweisen, mit einer an einem Rahmen (12) festgelegten Trennfolie (11), die mit Hilfe des Rahmens in den Bereich zwischen den Schweißstegen (9) und den miteinander zu verschweißenden, ihrerseits beim Schweißvorgang an den Stegen (7,8) des Gegenwerkzeugs (5) anliegenden Stützrändern der Unter- und der Oberfolie (1,13'; 2,13) einführbar ist, dadurch gekennzeichnet, daß die Trennfolie (11) mindestens eine Aussparung aufweist, deren Begrenzungsrand innerhalb der Innenkanten der Schweißstege (7,8) verläuft.

10. Vorrichtung nach Anspruch 9, dadurch gekennzeichnet, daß die Trennfolie (11) mehrere Aussparungen aufweist, die jeweils von einem der in einem Thermoformverfahren vorgeformten Bereiche der Unterfolie (1,13') oder der Oberfolie (2,13) durchsetzbar sind.

11. Vorrichtung nach Anspruch 9 oder 10, dadurch gekennzeichnet, daß die durch die Trennfolie (11) gebildete Maske aus dünnem Metallblech oder hitzebeständiger Kunststoffolie hergestellt ist.

12. Vorrichtung nach einem der Ansprüche 9 bis 11, dadurch gekennzeichnet, daß die Schweißstege (7,8) auf ihrer der Aussparung zugewandten Seite jeweils mit einer Abdeckung (10) aus schlecht wärmeleitendem Material verkleidet sind.

13. Vorrichtung nach einem der Ansprüche 9 bis 12, dadurch gekennzeichnet, daß im von den Stegen (7;9) des Schweiß- und/oder des Gegenwerkzeugs (5',5) begrenzten Bereich eine Druckplatte (16',16) zur Druckbeaufschlagung der Unter- und Oberfolien (13',13) mit zwischenliegender Einlage (14) vorgesehen ist.

14. Vorrichtung nach Anspruch 13, dadurch gekennzeichnet, daß die Druckplatte (16';16) mit einem ihre Beaufschlagung ermöglichenden Druckstößel verbunden ist, der sich durch eine im Schweiß- bzw. im Gegenwerkzeug (5,5') vorgesehene Öffnung hindurch erstreckt.

15. Vorrichtung nach einem der Ansprüche 9 bis 14, dadurch gekennzeichnet, daß eine sich längs des der Maskenöffnung abgewandten Stützrandes der Folie (13') verlaufende gummielastische Leiste (19) vorgesehen ist, über die die beiden Stützränder der Unter- und der Oberfolie (13';13) beim und nach dem Verschweißen in gegenseitiger Anlage gehalten werden, und daß ein an eine Evakuiereinrichtung anschließbarer flacher Rohrstutzen (17) im Stützrandbereich zwischen Unter- und Oberfolie jedoch außerhalb des Schweißrandbereichs hindurchführbar ist.

16. Vorrichtung nach Anspruch 15, dadurch gekennzeichnet, daß die gummielastische Leiste (19) in einem auf wärmeisolierenden Stützelementen ruhenden Metallrahmen (20) gelagert ist.

17. Vorrichtung nach Anspruch 16, dadurch gekennzeichnet, daß die Stützelemente auf dem unteren Gegenwerkzeug (5) gelagert sind.

18. Vorrichtung nach Anspruch 15, dadurch gekennzeichnet, daß der Rohrstutzen (17) um eine horizontale Achse (18) aus dem Stützrandbereich hochklappbar gelagert ist.

19. Vorrichtung nach einem der Ansprüche 9 bis 18, dadurch gekennzeichnet, daß der die in Form einer Maske ausgebildete Trennfolie (11) tragende Rahmen (12) um eine horizontale Achse (15) hochschwenkbar gelagert ist.
